# EUROPEAN PATENT APPLICATION

(11) **EP 1 513 053 A2**
(43) Date of publication of application: **09.03.2005**
(21) Application number: 04020777.1
(22) Date of filing: 01.09.2004
(51) Int. Cl.: G06F 3/033

(54) **Apparatus and method for character recognition**

(30) Priority: 05.09.2003 KR 2003062222; 13.08.2004 KR 2004064060
(71) Applicant: Samsung Electronics Co., Ltd., Suwon-si, Gyeonggi-do (KR)
(72) Inventor: Chang, Sun-Hee, Yeongtong-gu Suwon-si Gyeonggi-do (KR)
(74) Representative: Grünecker, Kinkeldey, Stockmair & Schwanhäusser Anwaltssozietät

(57) **Abstract**

A character recognition apparatus and method in a terminal having a touch screen. In the character recognition apparatus, a user interface is divided into a plurality of character input areas displayed on the touch screen A basic letter and an extended letter are assigned to each of the character input areas. A display displays a letter received from the user interface. A controller selects a letter corresponding to a pen touch from a character input area upon input of the pen touch in the character input area and displays the selected letter on the display.

## Description

The present invention relates generally to a character recognition apparatus and method, and in particular, to an apparatus and method for recognizing characters entered through a touch screen in a terminal.

Existing text entry methods for a terminal having a touch screen are soft keyboard input and handwriting recognition. The soft keyboard input scheme refers to entry of characters by pen clicks on an input window in the form of a keyboard on the touch screen to avoid the inconvenience of carrying a general keyboard and a mouse in the terminal. The handwriting recognition method recognizes handwritten characters and converts them to data codes. Terminals having touch screens include electronic notebooks, mobile phones, and PDAs (Portable Digital Assistants). Along with the recent trend of mobile terminals toward small size and lightweight, touch screens are also scaled down and made lightweight. For soft keyboard input through a small-size touch screen, 26 keys are all displayed for entering alphabets on the screen. As a result, the size of the screen increases for text input and as a result, a text display area is relatively small. In addition, if a user is not accustomed to alphabets, the user must search for individual keys, one by one, prior to text entry. Due to the smaller size of buttons of the displayed keyboard, taps on wrong buttons may often occur, accompanied by repeated taps. Alternatively, the handwriting recognition scheme has the shortcomings of slow input and many user motions because the user takes down individual characters. Moreover, inaccurate writing of an intended character leads to wrong input of a similar character.

In summary, because a soft keyboard including all alphabetic keys (i.e. 26 keys) is fully displayed on a touch screen in the soft keyboard input scheme, an area in which entered characters are displayed is relatively small. Further, users not familiar with the alphabets, inconveniently enter text, looking for individual characters on the 26 keys, one by one. Also, the handwriting recognition has disadvantages of slow entry as the user must write down characters directly, and frequent erroneous entries if the user does not write down them accurately.

It is, therefore, the object of the present invention to provide a character recognition apparatus and method that enable a user to memorize keys on a soft keyboard easily and enter characters fast and conveniently, using a soft keyboard input on a touch screen.

This object is solved by the subject matter of the independent claims.

Preferred embodiments are defined by the dependent claims.

It is an aspect of the present invention to provide a character recognition apparatus and method for reducing the size of a soft keyboard in a soft keyboard input scheme.

It is a further aspect of the present invention to provide a character recognition apparatus and method for enabling accurate text entry on a touch screen.

The above object and other aspects are achieved by a character recognition apparatus and method in a terminal including a touch screen. In the character recognition apparatus, a user interface is divided into a plurality of character input areas displayed on the touch screen, and a pair of a basic letter and an extended letter is assigned to each of the character input areas. A display displays a letter received from the user interface. A controller selects a letter corresponding to a pen touch from a character input area upon input of the pen touch in the character input area and displays the selected letter on the display.

In the character recognition method, a pen touch signal is received from a character input area through a user interface. The user interface has a plurality of character input areas displayed on the touch screen, a pair of a basic letter and an extended letter is assigned to each of the character input areas, and the character input areas are grouped as extended character areas according to the relationship between basic letters and extended letters in the character input areas. If the pen touch signal is a pen click signal, a basic letter corresponding to the pen touch input from the pen-touched character input area is displayed. If the pen touch input is a pen drag signal in a predetermined extended character direction, an extended letter corresponding to the pen touch input from the pen-touched character input area is displayed.

The above features and advantages of the present invention will become more apparent from the following detailed description when taken in conjunction with the accompanying drawings in which:
FIG. 1 is a block diagram of a terminal including a touch screen according to the present invention;
FIG. 2 is a flowchart illustrating an operation for identifying inputs of the English alphabet according to pen clicks and pen drag directions according to an embodiment of the present invention;
FIG. 3 is a flowchart illustrating an operation for identifying inputs of the English alphabet according to pen clicks and pen drag directions according to another embodiment of the present invention;
FIG. 4 illustrates an embodiment of a soft keyboard displayed on the touch screen, for entering letters of the English alphabet according to the present invention;
FIG. 5 illustrates pen drag directions to enter English extended letters and vowels according to the present invention;
FIGs. 6A and 6B illustrate embodiments of soft keyboards including the pen drag directions for entering the English extended letters and vowels according to the present invention;
FIG. 7 illustrates a list including letters of the English alphabet and guides for entering them through the soft keyboard according to the second embodiment of the present invention;
FIG. 8 is a flowchart illustrating an operation for identifying input Korean characters according to pen clicks and pen drag directions according to a third embodiment of the present invention;
FIG. 9 illustrates a soft keyboard displayed on the touch screen to enter Korean characters according to the third embodiment of the present invention; and
FIG. 10 illustrates pen drag directions to enter Korean extended letters, double consonants, and vowels according to the third embodiment of the present invention.

Preferred embodiments of the present invention will be described in detail herein below with reference to the accompanying drawings. In the following description, well-known functions or constructions are not described in detail since they would obscure the invention in unnecessary detail.

The present invention provides a method of entering characters through soft keys, fast and conveniently. In accordance with the present invention, two consonants similar to each other in form are assigned to each key and vowels are formed by dragging a pen in their corresponding directions, thereby reducing the size of a keyboard displayed on a touch screen. The grouping of characters having similar forms facilitates a user to memorize keys and the one-drag character input without the need for drawing a character in its full shape like handwriting increases a character input speed.

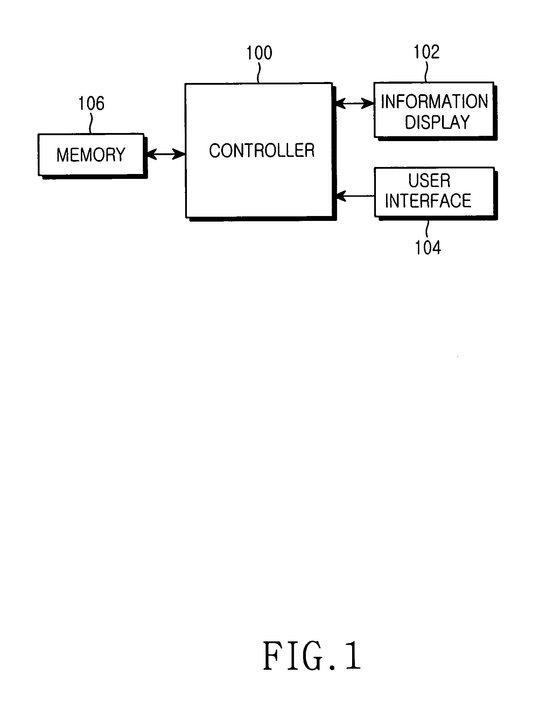

FIG. 1 is a block diagram of a terminal equipped with an alphabet recognition function according to the present invention. The terminal, having a touch screen to which the present invention is applied, includes a controller 100, an information display 102, a user interface 104, and a memory 106. Upon input of a pen stroke, the user interface 104 feeds an input signal to the controller 100. The user interface 104 is a touch screen in the present invention. The controller 100 determines from the received signal whether the pen stroke is a pen click or a pen drag. In the present invention, basic consonants can be entered by single pen clicks, and extended consonants and vowels can be entered by double clicks or drags.

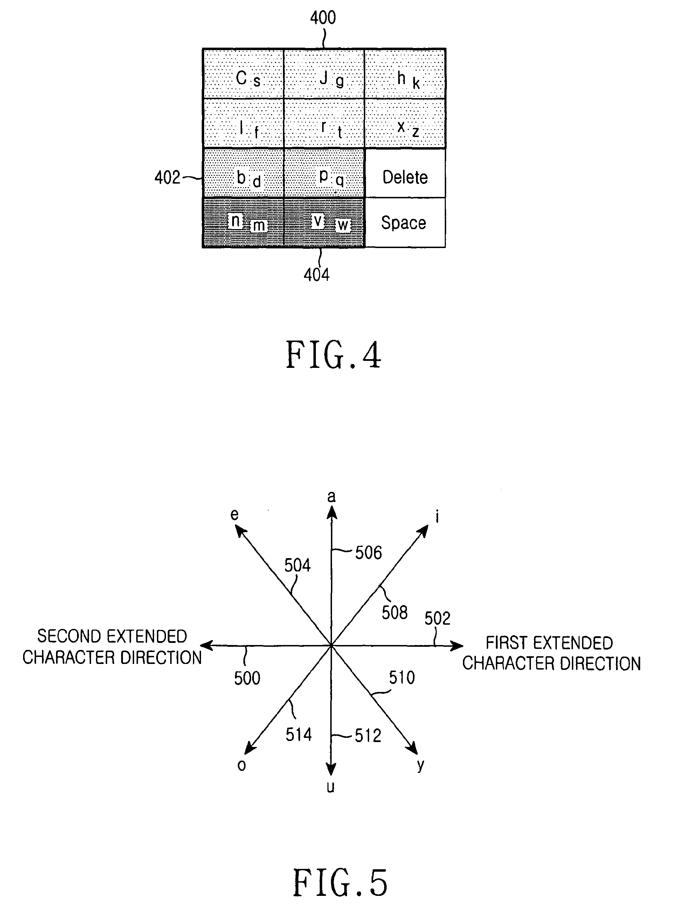

An embodiment of a soft keyboard having consonants displayed thereon according to the present invention is illustrated in FIG. 4. Referring to FIG. 4, one basic letter and one extended letter are mapped to each key on the soft keyboard. Herein, one key is defined as a character input area. In the present invention, basic letters refer to consonants "c, j, h, 1, r, x, b, p, n, v" and extended letters refer to letters similar to basic letter in shape or requiring one or two more strokes than their basic letters, letters vertically symmetrical to their basic letters, or letters built up by repeating their basic letters. For example, an extended letter "s" is derived from a basic letter "c" by using one more stroke, "d" is an extended letter for "b" due to its symmetry to "b", and an extended letter "m" is a repeated version of a basic letter "n". The basic-extended letter pairs are stored in the memory 106. In FIG. 4, 12 soft keys are shown. Each basic-extended letter pair is assigned to one character input area. That is, the soft keyboard by which to enter alphabets is displayed in 12 character input areas on the information display 110.

As illustrated in FIG. 4, the soft keyboard can be divided into a first extended character area 400 having extended letters similar to basic letters in shape or requiring one or more strokes than basic letters, a second extended character area 402 having extended letters symmetrical to basic letters, and a third extended character area 404 having extended letters being repetitions of basic letters. In this manner, the soft keyboard displays consonants.

How extended letters and vowels can be entered through the soft keyboard illustrated in FIG. 4 will be described below with reference to FIG. 5. FIG. 5 illustrates pen drag directions in which a pen is dragged to input extended letters or vowels according to an embodiment of the present invention.

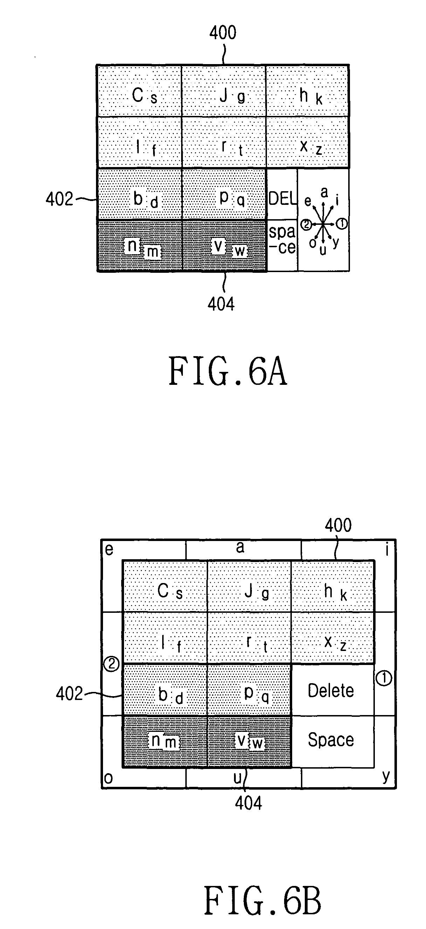

Referring to FIG. 5, upon input of pen drags in directions 500 and 502, the controller 100 displays corresponding extended letters, recognizing that the pen drag directions 500 and 502 are for the extended letters. For a pen drag direction 504, the controller 100 displays "e" on the information display 102. Upon input of a pen drag in a direction 506, the controller 100 displays "a" on the information display 102. If a pen is dragged in a direction 508, the controller 100 displays "i" on the information display 102. For pen drag directions 510, 512, and 514, the controller 100 displays "y", "u", and "o", respectively, on the information display 102. (Fig. 5 "n" -> "u") As described above, vowels are input by dragging the pen in their directions. Because no specific character input areas are set for input of the vowels, the vowels can be entered by pen dragging in any character input area of the soft keyboard. Additionally, an area of the character input areas could be defined for input of vowels. In this case, recognition error rate would be decreased. For example, as illustrated in FIGs. 6A and 6B, which will be described in more detail herein below, vowels can be input by a pen drag in an area for displaying a drag direction of vowels.

When using the soft keyboard illustrated in FIG. 4, a user must have knowledge of the pen drag directions illustrated in FIG. 5 to enter the vowels because the soft keyboard is limited to consonants. Considering that the user may have difficulty memorizing the vowel drag directions, soft keyboards having the vowel drag directions defined thereon can be further contemplated as illustrated in FIGs. 6A and 6B.

FIGs. 6A and 6B illustrate other embodiments of the soft keyboard which additionally have the pen drag directions defined thereon to enter extended letters and vowels according to other embodiments of the present invention. These soft keyboards notify the user of input directions for extended letters and vowels and thus facilitate alphabet input.

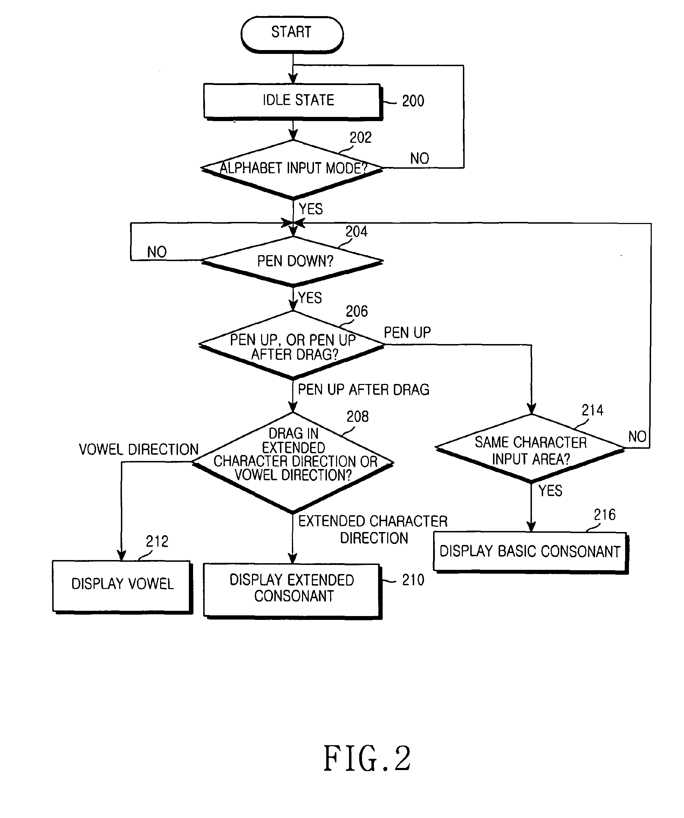

A method of recognizing input letters from the soft keyboard illustrated in FIG. 4 will be described in connection with FIG. 2. FIG. 2 is a flowchart illustrating a control operation for recognizing alphabets input by a pen click or a pen drag according to an embodiment of the present invention.

Referring to FIG. 2, the controller 100 is in an idle state in step 200 and determines whether an alphabet input mode has been set in step 202. Upon setting of the alphabet input mode, the controller 100 determines whether a pen is down in step 204. Upon sensing the pen-down, the controller 100 determines whether the pen is just up, or up after a drag in step 206. If the pen-up directly follows the pen-down, that is, a single pen click is made, the controller 100 determines whether the pen-down and the pen-up have occurred in the same character input area in step 214. If they occurred in the same character input area, the controller 100 displays a basic consonant corresponding to the character input area in step 216. For example, if the pen click occurs in a character input area having "b" and "d", "b" is displayed on the information display 102.

However, when the pen-up occurred after a pen drag in step 206, the controller 100 checks the pen drag direction in step 208. Pen drag directions include vowel directions 504, 506, 508, 510, 512, and 514, and a first extended character direction, and a second extended character direction as illustrated in FIG. 5. In the embodiment of the present invention, the controller 100 recognizes input of an extended letter irrespective of character input areas when a pen drag is made in one of the first and second extended character directions. If the pen was dragged in the extended character direction 500 or 502 in step 208, the controller 100 displays the extended letter of a corresponding character input area in step 210. For example, if the pen-down occurred in a character input area having "c" and the pen drag was made to the right or to the left, followed by the pen-up, "s" is displayed.

If the pen was dragged in one of the directions 504, 506, 508, 510, 512, and 514 in step 208, the controller 100 displays a vowel corresponding to the pen drag direction in step 212. For example, upon sensing a pen drag in the direction 506, the controller 100 displays "a". As stated above, the controller 100 recognizes a basic consonant from a single pen click in a character input area, an extended consonant from a pen drag in one of the extended character directions 500 and 502, and a vowel from a pen drag in one of the vowel directions 504, 506, 508, 510, 512, and 514. Because a vowel is entered by a pen drag with no vowels displayed in the character input areas unlike consonants, soft keys are saved. Furthermore, the controller 100 recognizes vowel input from a pen drag irrespective of character input areas on the soft keyboard having no character input areas defined for vowels thereon.

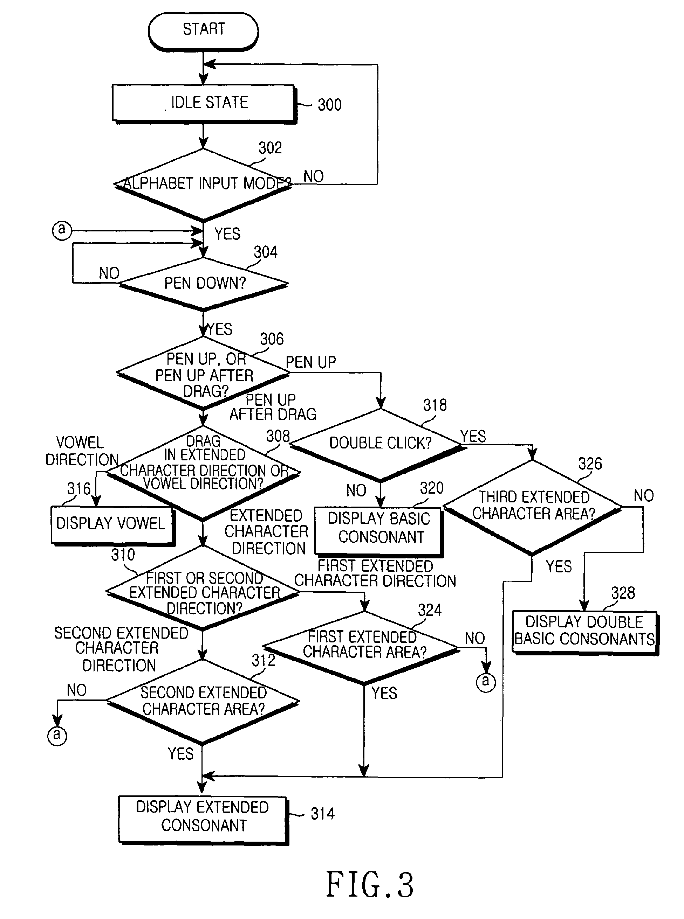

A description will be made of a method of recognizing characters in the case where an extended letter is entered according to its character input area and extended letter direction through the soft keyboard divided into the first, second, and third extended character areas 400, 402, and 404 with reference to FIG. 3.

The first extended character area 400 has extended letters which are similar to basic letters in shape and requires one or more strokes than the basic letters. In the present invention, an extended consonant in the first extended character area 400 can be entered by dragging a pen to the right, that is, in the direction 502. The second extended character area 402 has extended letters symmetrical vertically to basic letters. An extended consonant in the second extended character area 402 can be entered by dragging the pen to the left, that is, in the direction 500. The third extended character area 404 has extended letters being repetitions of basic letters. An extended consonant in the third extended character area 403 can be entered by double-clicking the pen which implies a repetition of a basic letter.

FIG. 3 is a flowchart illustrating a control operation for recognizing input letters according to pen clicks and pen drag directions according to another embodiment of the present invention. Referring to FIG. 3, the controller 100 is in an idle state in step 300 and determines whether an alphabet input mode has been set in step 302. Upon setting of the alphabet input mode, the controller 100 determines whether a pen is down in step 304. Upon sensing the pen-down, the controller 100 determines whether the pen is just up, or up after a drag in step 306. If the pen-up directly follows the pen-down, the controller 100 determines whether this is a single pen click or a double pen click in step 318. When another pen click occurs a predetermined time after one pen clock, the controller 100 determines the pen-down and then the pen-up as a double click. If the following pen click occurs after a longer time than the predetermined time, the controller 100 considers this pen click as a single pen click. In the case of a single pen click, the controller 100 displays a basic consonant corresponding to a corresponding character input area in step 320. For example, if the pen click occurs in a character input area having "b", "b" is displayed on the information display 102.

However, for a double pen click, the controller 100 determines whether the pen-down and pen-up have occurred in the third extended character area, that is, whether a letter from a character input area requiring a double click has been entered in step 326. If the double click is from the third extended character area, the controller 100 displays an extended consonant in a corresponding character input area in step 314. For example, if the double click was made in a character input area having a basic letter "n", its extended letter "m" is displayed. However, if the double click is not from the third extended character area, in other words, if the double click is from one of the first and second extended letter areas, the controller 100 twice enters a basic consonant in a corresponding character input area in step 328.

If the pen-up occurred after a pen drag in step 306, the controller 100 checks the pen drag direction in step 308. Pen drag directions include vowel directions 504, 506, 508, 510, 512, and 514, and the first extended character direction, and the second extended character direction as illustrated in FIG. 5. If the pen was dragged in an extended character direction, the controller 100 determines whether it is the first or second extended character direction in step 310. In the case of the first extended character direction, the controller 100 determines whether the pen-down and pen-up have occurred in the first extended character area in step 324. If they have, the controller 100 displays an extended consonant in a corresponding character input area in step 314. For example, if the pen was dragged in the first extended character direction 502 in a character input area having "c" and "s", "s" is displayed.

In the case of the second extended character direction in step 310, the controller 100 determines whether the pen-down and pen-up have occurred in the second extended character area in step 312. If they have, the controller 100 displays an extended consonant in a corresponding character input area in step 314. For example, if the pen was dragged in the second extended character direction 500 in a character input area having "b" and "d", "d" is displayed.

However, if the pen was dragged in one of the directions 504, 506, 508, 510, 512, and 514 in step 308, the controller 100 displays a vowel corresponding to the pen drag direction in step 316. For example, upon sensing a pen drag in the direction 504, the controller 100 displays "e".

In the second embodiment of the present invention, concerning consonant input, a basic consonant is recognized from a single pen click in all character input areas, and an extended consonant is recognized from a single pen drag in the first extended character direction 502 in the first extended character area, a single pen drag in the second extended character direction 500 in the second extended character area, or a double click in the third extended character area. Concerning vowel input, a vowel is recognized from a single pen drag in one of the vowel directions 504, 506, 508, 510, 512, and 514 irrespective of character input areas in the soft keyboard. Because vowels are entered by dragging the pen in the vowel directions without the need for displaying the vowels in the character input areas like the consonants, soft keys are saved.

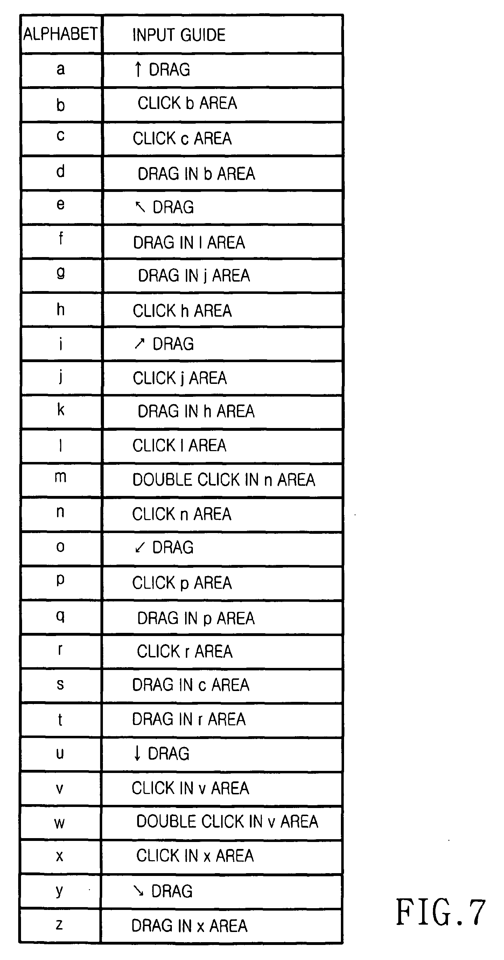

An example of entering basic and extended consonants according to the procedure illustrated in FIG. 3 will be described with reference to FIG. 7. FIG. 7 illustrates how alphabets are input using the soft keyboard on the touch screen according to the second embodiment of the present invention. For example, to input "a", the pen is dragged in the direction 506 in any area of the soft keyboard and then taken up. To input "q", the pen is dragged in the second extended character direction 500 in a character input area having a basic letter "p".

In the first and second embodiments as described above, the number of soft keys displayed on the touch screen is reduced, and two similar basic and extended letters are mapped so that a basic consonant can be entered by a pen click in a corresponding character input area, and an extended consonant, by a pen drag in the character input area. A vowel is entered by a pen drag in a vowel direction regardless of the character input areas.

Characters other than from the English alphabet, such as Korean, Japanese, and French, can be entered in the same manner. That is, a basic-extended letter pair is mapped to one key and such basic-extended letter pairs are allocated to character input areas. Thus, one of the letters in a character input area is selected according to a pen input in the character input area.

Additionally, according to the characteristics of languages, letters do not need to be mapped to keys by only pairs. For example, some basic letters are mapped to each key respectively without any extended letters, and some basic letters are mapped to each key with three, four, etc., extended letters.

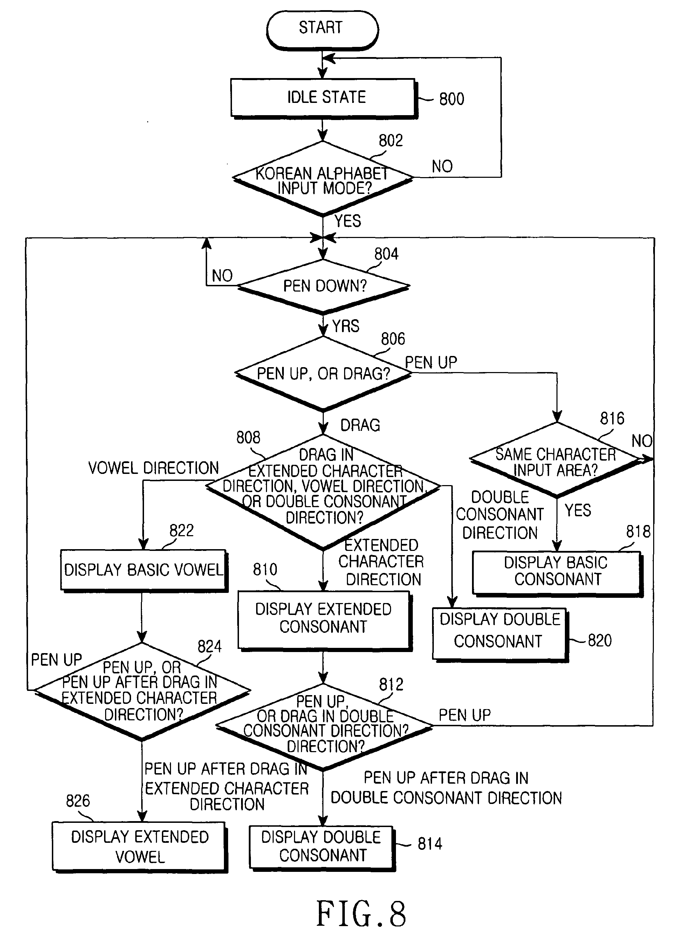

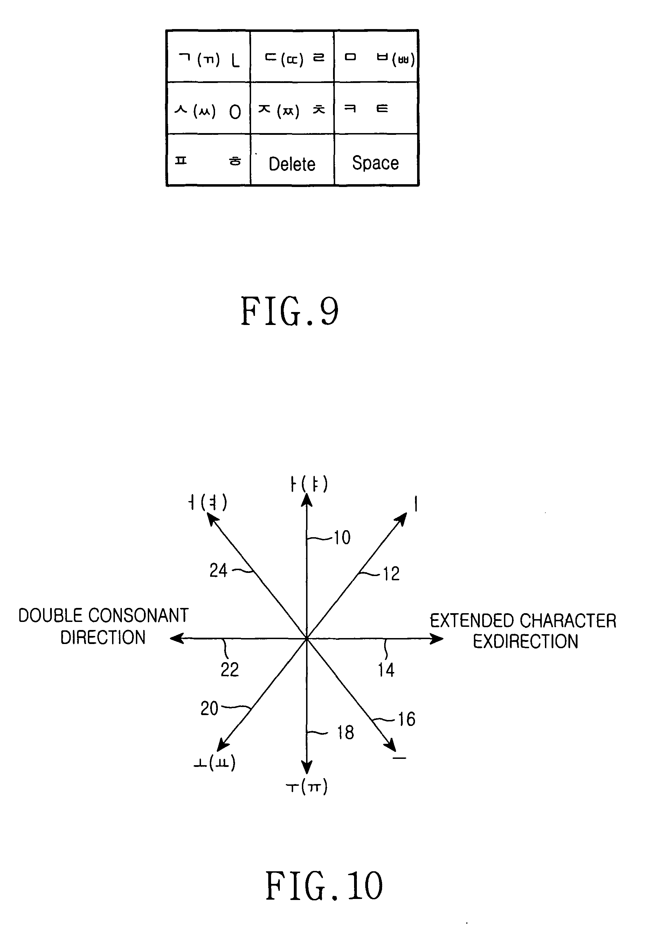

Referring to FIGs. 8, 9, and 10, a method of entering Korean alphabets on the touch screen will be described below. FIG. 8 is a flowchart illustrating a control operation for identifying an input Korean character according to a pen click and a pen drag direction according to a third embodiment of the present invention. FIG. 9 illustrates a soft keyboard displayed on the touch screen to enter Korean characters according to the third embodiment of the present invention, and FIG. 10 illustrates pen drag directions to enter Korean extended letters, double consonants, and vowels according to the third embodiment of the present invention.

Referring to FIG. 8, the controller 100 is in an idle state in step 800 and determines whether a Korean alphabet input mode has been set in step 802. Upon setting of the Korean alphabet input mode through the user interface 104, the controller 100 determines whether a pen is down in step 804. Upon sensing the pen-down, the controller 100 determines whether the pen is up, or dragged in step 806. If the pen-up directly follows the pen-down, that is, a single pen click is made, the controller 100 determines whether the pen-down and the pen-up have occurred in the same character input area in step 816. If they occurred in the same character input area, the controller 100 displays a basic consonant corresponding to the character input area in step 818. For example, if the pen click occurs in a character input area having a basic letter "┐" , "┐" is displayed on the information display 102.

However, when the pen was dragged in step 806, the controller 100 checks the pen drag direction in step 808. Pen drag directions include vowel directions 10, 12, 16, 18, 20, and 24, and an extended character direction 14, and a double consonant direction 22 as illustrated in FIG. 10. If the pen was dragged in the extended character direction 14 in step 808, the controller 100 displays the extended letter of a corresponding character input area in step 810. For example, if the pen-down occurred in a character input area having "┐" and the pen drag was made in the extended character direction 14, an extended letter " └" of the basic letter "┐" is displayed.

In step 812, the controller 100 determines whether the pen is up, or up after a drag in the double consonant direction. If the pen is up with the extended letter displayed, the controller 100 returns to step 804 for another character input. If the pen is dragged in the double consonant direction and then up, the controller 100 displays a double consonant corresponding to the displayed extended consonant in step 814. For example, if the pen is down in a character input area having a basic consonant " 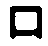 " and an extended consonant " 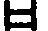 ", dragged in the extended character direction 14, dragged in the double consonant direction 22, and then up, the controller 100 displays " 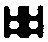 ".

If the pen was dragged in one of the directions in step 808, the controller 100 displays a vowel corresponding to the pen drag direction in step 822. For example, upon sensing a pen drag in the direction 10, the controller 100 displays " 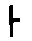 ". In step 824, the controller 100 determines whether the pen is up, or up after a drag in the extended character direction with the basic vowel displayed. If the pen is up, the controller 100 returns to step 804 for another character input. If the pen is dragged in the extended character direction and then up, the controller 100 displays an extended vowel corresponding to the displayed basic vowel in step 826. For example, if the pen is dragged in the extended character direction with " 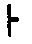 " displayed for the input of a pen drag in the direction 10, and then the pen is up, the controller 100 displays " 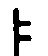 " being an extended vowel for the basic vowel " 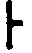 ".

If the pen was dragged in the double consonant direction in step 808, the controller 100 displays a double consonant in a corresponding character input area in step 820. The controller 100 recognizes the double consonant for the basic consonant in the pen-down character input area. For example, if the pen is down in a character input area having a basic consonant "┐" and dragged in the double consonant direction, " 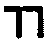 " is displayed as a double consonant for "┐ ".

In the third embodiment of the present invention, a Korean basic consonant is recognized from a single pen click in a character input area, a Korean extended letter is recognized from a pen drag in an extended character direction in a character input area, and a Korean double consonant is recognized from a pen drag in a double consonant direction. Concerning Korean vowel input, there are no separate character input areas for vowels, and a vowel is recognized from a pen drag in any of character input areas in the soft keyboard according to a pen drag direction.

As described above, two similar basic and extended consonants are mapped to one character input area in a soft keyboard of a touch screen in the present invention. Therefore, soft keys are saved and the size of the keyboard is reduced. Basic and extended consonants are entered by a pen click and a pen drag, respectively, in a corresponding character input area, thereby enabling a user to memorize keys more easily and facilitating more accurate character input.

While the present invention has been shown and described with reference to certain preferred embodiments thereof, it will be understood by those skilled in the art that various changes in form and details may be made therein without departing from the scope of the invention as defined by the appended claims.

## Claims

1. A character recognition apparatus in a terminal including a touch screen, comprising:
a user interface including at least one character input area displayed on the touch screen, wherein a basic letter and at least one extended letter is assigned to the at least one character input area;
a controller for selecting a letter corresponding to a type of pen touch on the at least one character input area; and
a display for displaying the letter selected.

2. The character recognition apparatus of claim 1, wherein the selected letter is the basic letter if the type of pen touch is a single pen click, and an extended letter if the type of pen touch is a one of a pen drag in a predetermined direction and a double click.

3. The character recognition apparatus of claim 1, wherein the selected letter is a vowel if the type of pen touch is a pen drag in the vowel direction.

4. The character recognition apparatus of claim 3, wherein the pen drag in the vowel direction can be made in any of the plurality of character input areas.

5. The character recognition apparatus of claim 3, wherein the user interface further includes at least one character input area for inputting vowels.

6. The character recognition apparatus of claim 1, wherein the selected letter is a double consonant if the type of pen touch is a pen drag in a double consonant direction.

7. A character recognition apparatus in a terminal including a touch screen, comprising:
a user interface including a plurality of character input areas displayed on the touch screen, for outputting a character input signal according to a user input, wherein a basic letter and at least one extended letter being assigned to at least one of the character input areas and the character input areas are divided into at least two groups;
a controller for selecting one of the basic letter and the at least one extended letter corresponding to a type of pen touch on the at least one of the character input areas; and
a display for displaying the selected letter.

8. The character recognition apparatus of claim 7, wherein groups of the character input areas are determined based on relationships between basic letters and extended letters in the character input areas.

9. The character recognition apparatus of claim 7, wherein the selected letter is the basic letter if the type of pen touch is a single pen click, and the extended letter if the type of pen touch is one of a pen drag in an extended character direction and a double click.

10. The character recognition apparatus of claim 9, wherein the groups of the character input areas comprise:
a first character area being a group of character input areas assigned an extended letter written with at least one more stroke than a basic letter;
a second character area being a group of character input areas which have an extended letter that is vertically symmetrical to a basic letter; and
a third character area being a group of character input areas which have an extended letter being similar to a basic letter in shape in the extended letter is written as a repetition of the basic letter.

11. The character recognition apparatus of claim 10, wherein the displayed letter is an extended letter from a character input area of the first character area if the type of pen touch is a pen drag in a first extended character direction, an extended letter from a character input area of the second character area if the type of pen touch is a pen drag in a second extended character direction, and an extended letter from a character input area of the third character area if the type of pen touch is a double click.

12. The character recognition apparatus of claim 9, wherein the displayed letter is a vowel if the type of pen touch is a pen drag in a vowel direction.

13. The character recognition apparatus of claim 12, wherein the pen drag in the vowel direction can be made in any of the character input areas.

14. The character recognition apparatus of claim 7, wherein the user interface further includes character input areas for input of vowels.

15. A character recognition method in a terminal including a touch screen, comprising the steps of:
receiving a pen touch input from a character input area through a user interface including a plurality of character input areas displayed on the touch screen, wherein a basic letter and at least one extended letter are assigned to at least one of the character input areas; and
displaying a letter corresponding to the pen touch input.

16. The character recognition method of claim 15, wherein the step of displaying the letter comprises the steps of:
displaying a basic letter corresponding to the pen touch input, if the pen touch input is a pen click;
displaying an extended letter corresponding to the pen touch input, if the pen touch input is a pen drag in an extended character direction; and
displaying a vowel if the pen touch input is a pen drag in a vowel direction.

17. The character recognition method of claim 16, wherein the pen drag in the vowel direction can be made in any of the character input areas.

18. The character recognition method of claim 15, wherein the extended letter is similar in shape to the basic letter assigned to the character input area in that the extended letter is at least one of written with at least one more stroke than the basic letter, vertically symmetrical to the basic letter, and a repetition of the basic letter.

19. The character recognition method of claim 15, wherein the letters are from the English alphabet.

20. The character recognition method of claim 15, wherein the letters are from the Korean alphabet.

21. The character recognition method of claim 15, wherein the displayed letter is a double consonant if the pen touch input is a pen drag in a double consonant direction.

22. A character recognition method in a terminal including a touch screen, comprising the steps of:
receiving a pen touch input from a character input area through a user interface including a plurality of character input areas displayed on the touch screen, wherein a basic letter and an extended letter are assigned to each of the character input areas and the character input areas are grouped as extended character areas according to a relationship between basic letters and extended letters in the character input areas;
displaying a basic letter corresponding to the pen touch input from the pen-touched character input area if the pen touch is a pen click signal; and
displaying an extended letter corresponding to the pen touch input from the pen-touched character input area if the pen touch input is a pen drag signal in a predetermined extended character direction.

23. The character recognition method of claim 22, wherein the step of displaying the extended letter comprises the steps of:
displaying an extended letter from the pen-touched character input area in a first extended character area if the pen touch input is a pen drag in a first extended character direction;
displaying an extended letter from the pen-touched character input area in a second extended character area if the pen touch input is a pen drag in a second extended character direction;
displaying an extended letter from the pen-touched character input area in a third extended character area if the pen touch input is a double click; and
displaying a vowel if the pen touch input is a pen drag in the vowel direction.

24. The character recognition method of claim 23, wherein the pen drag in the vowel direction can be made in any of the character input areas.

25. The character recognition method of claim 23, wherein the first extended character area is a group of character input areas assigned an extended letter written with at least one more stroke than a basic letter; the second extended character area is a group of character input areas which have an extended letter that is vertically symmetrical to a basic letter; and
the third extended character area is a group of character input areas which have an extended letter being similar to a basic letter in shape in the extended letter is written as a repetition of the basic letter.

26. The character recognition method of claim 22, wherein the letters are from the English alphabet.
